# EUROPEAN PATENT APPLICATION

(11) **EP 3 502 953 A1**
(43) Date of publication of application: **26.06.2019**
(21) Application number: 17208548.2
(22) Date of filing: 19.12.2017
(51) Int. Cl.: G06K 9/00

(54) **DRIVER MONITORING SYSTEM FOR A VEHICLE**

(71) Applicant: Continental Automotive GmbH, 30165 Hannover (DE)
(72) Inventor: Doi, Shinobu, Yokohama, 221-0062 (JP)

(57) **Abstract**

The present invention is related to a driver monitoring system (1) for a vehicle (4) . The driver monitoring system (1) comprises a camera (10), a mirror device (20) and a control unit (30) . Said mirror device (20) has a front surface comprising a plurality of mirror elements (21), the mirror elements (21) being arranged such that an angle of incidence of a beam of light on the surface is not equal to an emergent angle of the beam of light. The camera (10) is configured to capture an image of a face of a driver (2) of the vehicle (4) reflected by the mirror device (20) . Further, the control unit (30) is configured to monitor the driver (20) based on an analysis of the captured image.

## Description

The present invention relates to a driver monitoring system, an instrument cluster for a vehicle, a vehicle comprising such a driver monitoring system, a method for monitoring a driver, a computer program element and a computer-readable medium.

Driver monitoring cameras are typically mounted on the steering wheel column or positioned on the dashboard, where the head-on view of the face of the driver may be obtained under an angle and not from the centre of the instrument cluster. The ideal position of the driver monitoring camera would be at the centre of the instrument cluster, looking straight towards the driver, but placing it there may obstruct the view on the instrument cluster. In general, the instrument cluster may not have enough free space to position the camera for driver face capturing. There are attempts to integrate the camera into the instrument cluster, in particular, on top of a TFT display. Further, to capture a 3D (stereo) image of the face of the driver, two cameras may be needed, leading to higher cost, increased size and increased complexity of the device.

It may be an object of the present invention to monitor a driver.

The object of the present invention is solved with the subject matter of the independent claims, wherein further embodiments are incorporated in the dependent claims.

A first aspect of the present invention is related to a driver monitoring system for a vehicle. The driver monitoring system comprises a camera, a mirror device and a control unit. Said mirror device has a front surface comprising a plurality of mirror elements, the mirror elements being arranged such that an angle of incidence of a beam of light on the surface of the mirror device is not equal to an emergent angle of the beam of light. The camera is configured to capture an image of a face of a driver of the vehicle reflected by the mirror device. Further, the control unit is configured to monitor the driver based on an analysis of the captured image.

The invention uses the mirror device to reflect light, a light beam or an image into a camera for monitoring the driver of the vehicle. Thus, the camera may be virtually positioned at the ideal position for monitoring the driver, i.e. in the centre of an instrument cluster. The camera does not have to be positioned in the instrument cluster of the vehicle facing the driver. Further, the camera may be mounted at a hidden position. In contrast, the camera may be positioned at the top of the instrument cluster or the dashboard facing the mirror device, which reflects the light, the light beam or the image of the face of the driver towards the camera. The control unit may analyse the captured image for monitoring the driver. In particular, if the driver is tired, needs a break or is distracted. This will lead to a further increased traffic safety.

The characteristic of a mirror is that the angle of incidence is equal to the emergent angle when reflecting light or an image. The mirror device according to the present invention comprises a front surface comprising a plurality of mirror elements, aligned and structured according to the specific arrangement of the mirror device and the camera. The mirror device as a main orientation, i.e. the plane of the surface. With regard to the main orientation of the mirror device each one of the mirror elements is inclined or has an angle. Resulting in that the angle of incidence is not equal to the emergent angle of the mirror device with respect to the main orientation of the mirror device, i.e. the front surface. In other words, the light beam may be formed according to the specific arrangement of the mirror elements. Thus, a beam forming of the light, the light beam or the image may be achieved by the mirror device.

The mirror elements of the mirror device may be aligned parallel above each other and parallel to the horizon. Alternatively or in addition, the mirror elements of the mirror device may be aligned parallel to each other but not parallel to the horizon. Thus, the mirror device may be rotated with regard to the horizon to reflect the light beam away from a middle or towards a middle. The mirror elements may also be aligned in a circular manner or in another geometric arrangement to reflect the light beam according to the specific use case.

The terms "visible" and "non-visible" light are with regard to the human eye. Thus, non-visible light may be infrared or ultraviolet light, which the human eye is not capable of seeing. However, the camera may be configured to capture also a non-visible light image.

According to an embodiment of the invention, the mirror device is transparent for visible light and reflective for non-visible light. Further, the camera is configured to capture a non-visible light image.

Thus, the camera may be an infrared or an ultraviolet sensitive camera, which may be configured to capture an image also in the non-visible light spectrum. The mirror device may be transparent for visible light and at the same time, the mirror device reflects non-visible light towards the camera. Thus, the driver may look through the mirror device and is able to see objects behind it, such as the instrument cluster, while the mirror device reflects the image of the face of the driver towards the camera. Thus, the camera may be virtually positioned at the centre of the instrument cluster having an ideal field of view with respect to the driver, without having the camera installed in the middle of the instrument cluster, where it would disturb the driver. Further, the control unit may analyse the captured non-visible light image for monitoring the driver of the vehicle, for example if he/she is tired, needing a break or is distracted.

According to an embodiment of the invention, the mirror device is a micro mirror foil, comprising a plurality of micro prisms as mirror elements.

The mirror device may be implemented in various ways, for example, the mirror device may comprise a plurality of micro prisms embedded in a foil, wherein the inclined surfaces of each prism reflects the non-visible light towards the camera. Further, the mirror device may comprise a plurality of micro mirrors, wherein each micro mirror is inclined with respect to the main orientation, i.e. the front surface, of the mirror device to reflect the non-visible light.

According to an embodiment of the invention, the mirror device comprises at least two areas with different specific arrangements of the plurality of mirror elements. The at least two areas reflect the light from different directions, such that the camera captures one image reflected by the at least two areas of the mirror device, and the control unit is configured to monitor two different objects in the vehicle based on an analysis of the captured images.

The mirror device may comprise at least two areas of mirror elements with different angles of reflection, in a horizontal and/or vertical direction. The mirror device may reflect two different objects, one object under two different angles or two areas of the vehicle towards the camera. Thus, the control unit may analyse the captured image and monitors two different objects within the vehicle at the same time. In other words, the captured image may comprise the information of two different positions of the vehicle reflected by the at least two areas of the mirror device. Further, the mirror device may beamform two light beams from different positions in the vehicle to the camera.

According to another embodiment of the invention, the mirror device comprises at least two areas with different specific arrangements of the plurality of mirror elements. Further, the at least two areas reflect the light from different directions, such that the camera captures one image of one object under two different angles. Furthermore, the control unit is configured to generate a 3D image based on an analysis of the captured image.

Besides monitoring two different objects within the vehicle, also one object may be monitored from two different virtual positions. Thus, forming a virtual stereo camera. By doing so, one object, e.g. the face of the driver, may be captured under two different angles, e.g. from the right and from the left side. Having the information of these two sides, the control unit may determine a 3D image of the face of the driver. Thus, the monitoring of the driver may be further improved by the aid of the 3D image. It should be noted, that the two beamformed light beams have to intersect or at least they have to point towards each other.

According to an embodiment of the invention, the mirror device comprise at least three areas with different specific arrangements of the plurality of mirror elements and each of the three areas reflects the light in a different specific direction. Further, the control unit is configured to monitor the driver of the vehicle and the front passenger based on an analysis of the captured image.

The mirror device may comprise three or more different areas of mirror elements. Each one of the three or more areas reflect the light, the light beam or the image in a different direction. Thus, different positions of the vehicle may be captured by one single image of the camera. In other words, the mirror device reflects images of different objects, e.g. the driver, the front passenger and the rear passenger (2D and 3D, towards the camera and the control unit may be configured to analyse this image and monitor each one of the objects in the image. In other words, the mirror device may be configured to beamform three or more light beams.

According to yet another embodiment of the invention, the camera is configured to capture a non-visible light image and a visible light image at the same time, wherein the control unit is configured to monitor the driver and to monitor an instrument cluster of the vehicle based on an analysis of the captured image.

Thus, the camera may capture an image of the instrument cluster with visible light and at the same time the camera captures an image of the face of the driver with non-visible light, which was reflected by the mirror device. The mirror device may be executed as transparent for visible light and reflective for non-visible light. Thus, the instrument cluster may be visible behind the mirror device in the visible light spectrum, wherein in the non-visible light spectrum the mirror device acts as a mirror and reflects the non-visible light beam. Therefore, the control unit may analyse the captured image, visible and non-visible light image, for monitoring the instrument cluster, e.g. the displayed content, if all indications lights work properly or if the display comprises errors, as well as monitoring the face of the driver, e.g. if the driver needs a break or is distracted.

According to an embodiment of the invention, the mirror device is arranged on a concave or on a convex plane.

Besides being flat, the mirror device, in particular if the mirror device is a micro prism foil, may be arranged or mounted on a curved surface (convex or concave), e.g. a lens. Arranging the mirror device on a curved surface may lead to an expansion or focusing of the light beam reflected by the mirror device, which enlarges the degree of freedom for the application of the mirror device. Further, also the mirror elements on the surface of the mirror device may be aligned and structured such that an expansion or focusing of the light beam occurs.

According to another embodiment of the invention, the mirror device is arranged on a surface of the instrument cluster of a vehicle, facing the driver.

Advantageously, the virtual position of the camera is located in the centre of the instrument cluster, such that the face of the driver may be monitored in an ideal manner (head-on). Therefore, the mirror device is arranged on/at the instrument cluster facing the driver. Further, the camera is aligned on the mirror device, wherein, the mirror device reflects the light, the light beam or the image of the face of the driver into the camera.

According to a further aspect of the invention, an instrument cluster with the driver monitoring system is provided. The driver monitoring system further comprises a camera and a mirror device. The mirror device is arranged on a surface of the instrument cluster, wherein the surface faces the driver of the vehicle. Further, the camera is aligned on to the mirror device and is configured to capture an image of the driver reflected by the mirror device.

Thus, the above and in the following described driver monitoring system is arranged on the instrument cluster of the vehicle to monitor the driver of the vehicle.

According to a further aspect of the invention, a vehicle comprising a driver monitoring system, which is described above and in the following, is provided.

The vehicle may, for example, be a motor vehicle, such as a car, bus or truck.

A further aspect of the invention provides a method for monitoring a driver of a vehicle. The method comprises the following steps of:
- capturing, by a camera, an image of the driver reflected by a mirror device;
- Determine, by a control unit, the face of the driver based on the captured image;
- Monitor, by a control unit, the driver based on an analysis of the captured image,
wherein said mirror device has a front surface comprising a plurality of mirror elements, the mirror elements being arranged such that an angle of incidence of a beam of light on the surface is not equal to an emergent angle of the beam of light.

According to another aspect of the invention, there is provided a computer program element for controlling the driver monitoring system as previously described which, when the computer program element is executed by the control unit or by a processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

Exemplary embodiments will be described in the following with reference to the following drawings:
- Fig. 1: shows a side view of the driver monitoring system according to an embodiment of the invention.
- Fig. 2a: shows schematic view of the mirror device and the camera according to an embodiment of the invention.
- Fig. 2b: shows schematic view of the mirror device and the camera according to another embodiment of the invention.
- Fig. 3: shows schematic view of the mirror device and its characteristics according to an embodiment of the invention.
- Fig. 4: shows the mirror device (side and head-on view) according to an embodiment of the invention.
- Fig. 5: shows the mirror device (head-on view) with two different areas according to an embodiment of the invention.
- Fig. 6: shows the mirror device (head-on view) with two different areas and the camera being able to determine a 3D image according to an embodiment of the invention.
- Fig. 7: shows the driver monitoring system for monitoring the interior of the vehicle according to an embodiment of the invention.
- Fig. 8: shows five examples of structures of the mirror device according to an embodiment of the invention.
- Fig. 9: shows the instrument cluster, the mirror device and multiple possible camera positions according to an embodiment of the invention.
- Fig. 10: shows the vehicle with the driver monitoring system according to an embodiment of the invention.
- Fig. 11: shows a flow chart of a method for monitoring a driver of a vehicle.

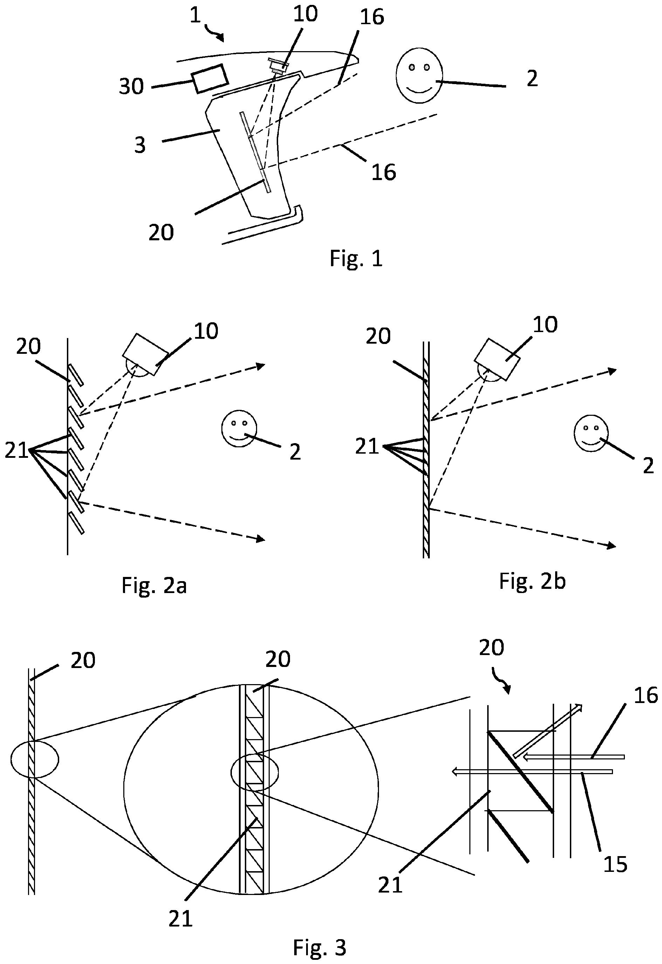

Fig. 1 shows the driver monitoring system 1. The driver monitoring system 1 comprises the camera 10, the mirror device 20 and the control unit 30. Further, an instrument cluster 3, on which the mirror device 20 is located, is shown. The face of the driver 2 is located in front of the instrument cluster 3, wherein the mirror device 20 is located between the face of the driver 2 and the instrument cluster 3. The light beam 16 or the image is represented by the dotted lines from the camera 10 over the mirror device 20 to the face of the driver 2. Further, it is shown that the camera 10 faces not directly the face of the driver 2. In contrast, the camera 10 captures a reflected image by the mirror device 20 of the face of the driver 2. In other words, the camera 10 is virtually positioned at the position of the mirror device 20. The mirror device 20 may be a micro mirror foil, which is transparent for visible light and reflective for non-visible light, such as infrared light or ultraviolet light. Thus, the driver 2 is still capable of seeing the instruments of the instrument cluster 3, while the camera 10 captures an image, reflected by the mirror device 20, of the face of the driver 2. The image captured by the camera 10 may be an infrared or ultraviolet light image. Further, the camera 10 may be positioned at an arbitrary position in/on the instrument cluster 3, since the mirror device 20 can be adapted to each arbitrary position of the camera 10, such that the camera 10 is virtually positioned at the centre of the instrument cluster 3 directly facing the driver 2. The mirror device 20 may comprise a plurality of mirror elements, which are aligned according to the particular use case.

In a further embodiment, the camera 10 may be configured to capture a non-visible light image and a visible light image at the same time. Thus, the camera 10 may be configured to monitor the instrument cluster and the content displayed thereon by the visible light image and to monitor the face of the driver 2 by the non-visible light image.

Fig. 2a and Fig. 2b showing two more detailed views of the mirror device 20 used in the driver monitoring system. In Fig. 2a, the mirror elements 21 are aligned one above the other with an equal distance between two adjacent mirror elements 21. Each mirror element 21 is inclined in view of the main orientation of the mirror device 20, e.g. the front surface of the mirror device 20. It is well understood, that the angle of incidence on each mirror element 21 is equal to the emergent angle. However, since each mirror element 21 is inclined in view of the main orientation of the mirror device 20, the angle of incidence is not equal to the emergent angle with respect to the main orientation or the front surface of the mirror device 20. Thus, the light beam 16 may be reflected in an advantageous manner, such that the camera 10 may capture the image of the face of the driver 2. According to the actual position of the camera 10 the mirror device 20 may be adapted, for example the angle inclination of each mirror element 21 may be adapted to the position of the camera. In Fig. 2a the mirror device 20 comprises multiple micro mirrors as mirror elements 21. In Fig. 2b the mirror device 20 comprises multiple micro prisms as mirror elements 21, which are embedded in a foil. The foil may be easily arranged or mounted on/at the instrument cluster.

Fig. 3 shows a more detailed view of the mirror device 20 of the driver monitoring system, wherein the sole mirror elements 21 are micro prisms and the plurality of micro prisms are embedded into a foil, which may be arranged on the instrument cluster of the vehicle. The mirror device 20 may be configured being transparent for visible light beams 15 and at the same time being reflective for non-visible light beams 16. Thus, the driver may see through the mirror device 20 and the camera may capture a non-visible light image of the face of the driver, which was reflected by the mirror device 20.

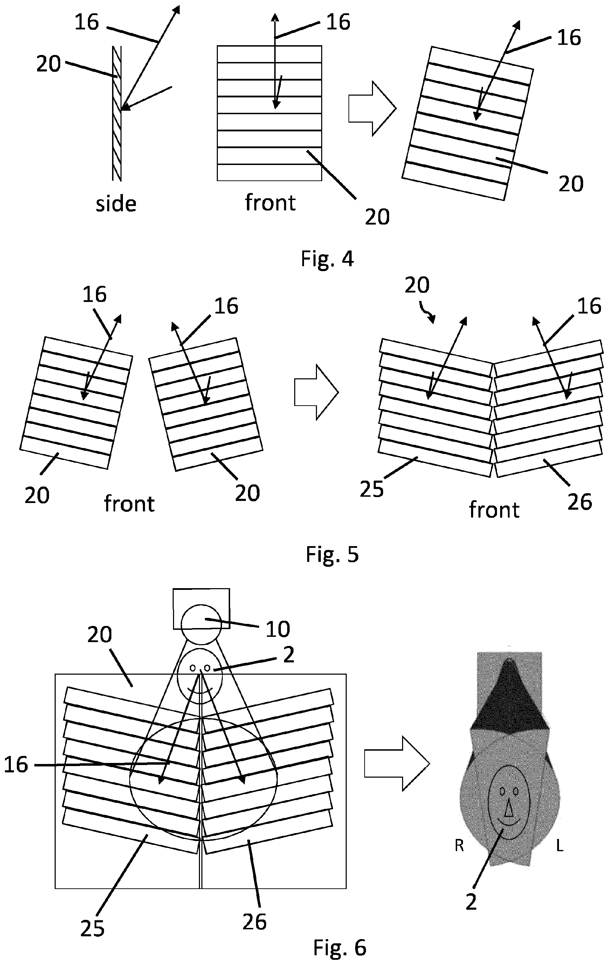

Fig. 4 shows the mirror device 20 in a side and in a head-on view. In the side view, it may be observed, that the mirror device 20 reflects an incoming light beam 16 under a certain emergent angle, which is not equal to an angle of incidence in view of the main orientation of the mirror device 20, e.g. the surface of the mirror device 20. In the head-on view it may be observed, that the non-visible light beam 16 is reflected to the top, and if the mirror device 20 is rotated, for example clockwise rotated, the non-visible light beam 16 is reflected in the direction of the rotation. Rotated in this sense means that the mirror elements are aligned in lines one above the other, but that the mirror elements have an angle in view of the horizon.

Fig. 5 shows two mirror devices 20, similar to the mirror device 20 of Fig. 4, which are combined to one mirror device 20 with two areas 25, 26. Each of the two areas 25, 26 of the mirror device 20 reflect the non-visible light beam 16 in a different direction, for example towards the middle between the two areas 25, 26 of the mirror device 20. Thus, two virtual cameras or a stereo camera may be simulated by this configuration of the mirror device 20.

Fig. 6 shows the mirror device 20, the face of the driver 2 and the camera 10. The field of view of the camera 10 is represented by the circle on the surface of the mirror device 20. The non-visible light beam 16 is reflected by the mirror device 20 towards the camera 10. Further, the camera 10 has no direct view onto the face of the driver 2, but indirectly over the mirror device 20. Furthermore, the mirror device 20 comprises two areas 25, 26, which reflect the light, the light beam 16 or the image in different directions, as shown in Fig. 5. The structure of the two areas 25, 26 is in such a manner that the face of the driver 2 is captured under two different angles from the right side and the left side. The left area 25 of the mirror device 20 reflects the non-visible light beam 16 to one side of the face of the driver 3 and the right area 26 of the mirror device 20 reflects the non-visible light beam 16 to the other side of the face of the driver 2. In other words, the non-visible light beam 16 is reflected by each one of the areas 25, 26 towards the middle between the two areas 25, 26 of the mirror device 20 and onto the same object, in this case the face of the driver 2. Thus, the captured image comprises two sections, one section with the face of the driver 2 from the left side and the other section with the face of the driver from the right side. Thus, a 3D image of the face of the driver 2 may be calculated or determined by a control unit out of one captured image.

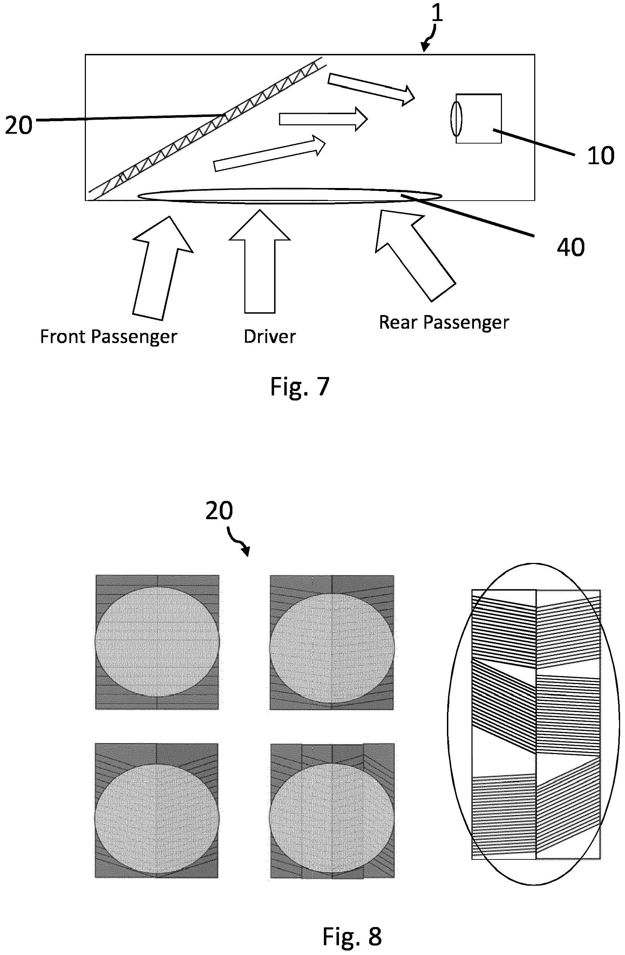

Fig. 7 shows a schematic view of the driver monitoring system 1. The light, the light beam or the image of the driver, the front passenger and the rear passenger are collected by a lens 40 and directed towards the mirror device 20. The mirror device 20 reflects the light beams or images of the different objects or positions in the vehicle towards the camera 10. Thus, the camera 10 captures one image comprising the driver, the front passenger and the rear passenger. This image may be analysed by the control unit to monitor each one of the passengers at the same time.

Fig. 8 shows five exemplary embodiments of arrangements, structures and orientations of mirror elements of the mirror device 20. The circle or the elapse on the surface of the mirror devices 20 represent the field of view of the camera. The first embodiment (left top image) shows a mirror device 20 with mirror elements aligned horizontally. Thus, the light or image will be reflected to the top or to the bottom, depending on if the mirror elements of the mirror device 20 are orientated upwards or downwards. Thus, the camera may be located central in front of the instrument cluster facing the instrument cluster. The second embodiment (middle top image) shows a mirror device 20 with two areas. The two areas are symmetric with respect to the middle between the two areas of the mirror device 20, forming a v-shape. The two areas reflect the light, the light beam or the image in different directions and under an angle with respect to the middle between the two areas of the mirror device. In this case, the reflection of the light beams of the two areas is towards the middle between the two areas. Thus, the reflected light beams from the two areas of the mirror device 20 will intersect. In other words, with this structure of the mirror device 20 one object, e.g. the face of the driver, may be captured under two different angles. By doing so, a control unit may determine or calculate a 3D image of the face of the driver based on an analysis of the captured image. The third embodiment (left bottom) is similar to the second embodiment. The reflecting angle towards the middle between the two areas of the mirror device 20 is more significant as in the second embodiment, resulting in an earlier intersection of the reflected light beams. The fourth (middle bottom) and the fifth (right) embodiment show more complex mirror devices 20, with multiple areas of mirror elements. Each one of the areas reflect the light, the light beam or the image in a different direction. Thus, multiple objects or positions in the vehicle may be monitored by only one camera and one mirror device 20, for example, the driver, the front passenger and the rear passenger are monitored at the same time, optionally also 3D images may be obtained for each one of the monitored objects or positions.

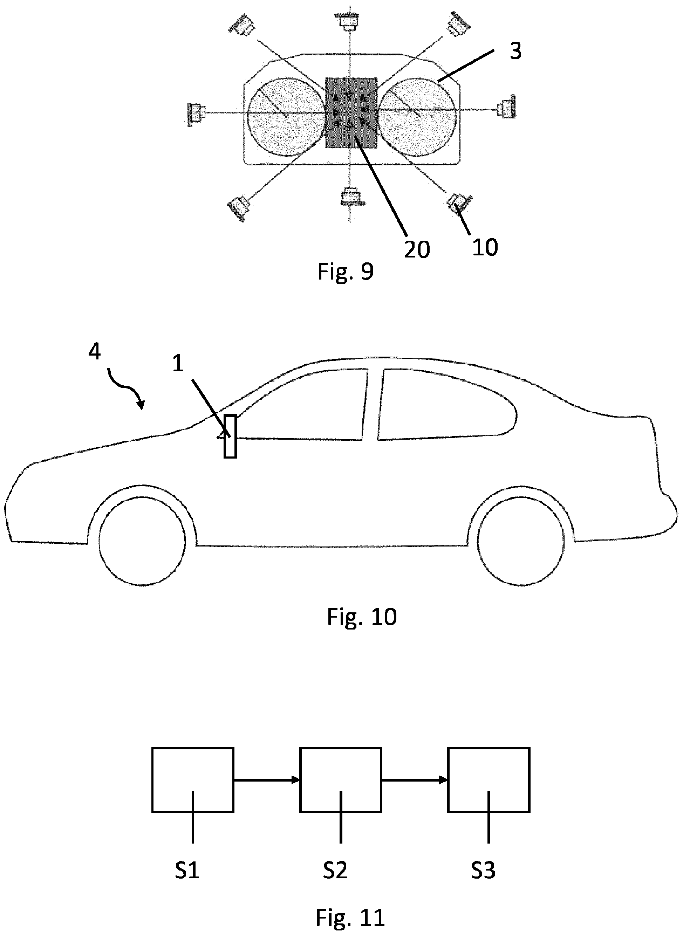

Fig. 9 shows the instrument cluster 3 according to an embodiment of the invention. On the instrument cluster 3 a mirror device 20, such as a micro prism foil or a micro mirror foil, is arranged, e.g. by gluing. The camera 10 can be positioned in each one of the shown positions around, at or on the instrument cluster 3. Dependent from the structure and the orientation of the mirror device 20 the light, the light beam or the image is reflected from the driver into the camera 10. Thus, with the aid of the mirror device 20, the camera 10 may be virtually positioned in the centre of the instrument cluster 20 having the ideal position for monitoring the driver. It should be noted that the position of the camera 10 and the structure and orientation of the mirror device 20 needs to be matched.

Fig. 10 shows a vehicle 4 with a driver monitoring system 1 or an instrument cluster 3. The driver monitoring system 1 is arranged in the dashboard of the vehicle 4 and behind the steering wheel of the vehicle 4.

Fig. 11 shows a flow chart of the method for monitoring a driver of a vehicle. In step S1 a camera captures an image of the driver, which was reflected by a mirror device. In step S2 a control unit determines the face of the driver based on the captured image. In step S3 the control unit monitors the driver based on an analysis of the captured image, wherein the mirror device has a front surface comprising a plurality of mirror elements. The mirror elements are arranged such that an angle of incidence of a beam of light on the surface is not equal to an emergent angle of the beam of light.

## Claims

1. A driver monitoring system (1) for a vehicle (4), comprising:
- a camera (10);
- a mirror device (20); and
- a control unit (30),
wherein said mirror device (20) has a front surface comprising a plurality of mirror elements (21), the mirror elements (21) being arranged such that an angle of incidence of a beam of light on the surface of the mirror device is not equal to an emergent angle of the beam of light,
wherein the camera (10) is configured to capture an image of a face of a driver (2) of the vehicle (4) reflected by the mirror device (20),
wherein the control unit (30) is configured to monitor the driver (2) based on an analysis of the captured image.

2. A system (1) according to claim 1,
wherein the mirror device (20) is transparent for visible light (15) and reflective for non-visible light (16), and
wherein the camera (10) is configured to capture a non-visible light (16) image.

3. A system (1) according to claims 1 and 2,
wherein the mirror device (20) is a micro mirror foil, comprising a plurality of micro prisms as mirror elements (21) .

4. A system (1) according to each one of the preceding claims,
wherein the mirror device (20) comprises at least two areas (25, 26) with different specific arrangements of the plurality of mirror elements (21),
wherein the at least two areas (25, 26) reflect the light from different directions, such that the camera (10) captures one image reflected by the at least two areas (25, 26) of the mirror device (20),
wherein the control unit (30) is configured to monitor two different objects in the vehicle (4) based on an analysis of the captured image.

5. A system (1) according to each one of the claims 1 to 3,
wherein the mirror device (20) comprises at least two areas (25, 26) with different specific arrangements of the plurality of mirror elements (21),
wherein the at least two areas (25, 26) reflect the light from different directions, such that the camera (10) captures one image of one object under two different angles, wherein the control unit (30) is configured to generate a 3D image based on an analysis of the captured image.

6. A system (1) according to each one of the preceding claims,
wherein the mirror device (20) comprises at three areas with different specific arrangements of the plurality of mirror elements (21),
wherein each of the three areas reflects the light in a different specific direction, and
wherein the control unit (30) is configured to monitor the driver (2) of the vehicle and the front passenger based on an analysis of the captured images.

7. A system (1) according to each one of the preceding claims,
wherein the camera (10) is configured to capture a non-visible light (16) image and a visible light (15) image at the same time,
wherein the control unit (30) is configured to monitor the driver (2) and to monitor an instrument cluster (3) of the vehicle (4) based on an analysis of the captured image.

8. A system (1) according to each one of the preceding claims,
wherein the mirror device (20) is arranged on a concave or on a convex plane.

9. A system (1) according to each one of the preceding claims,
wherein the mirror device (20) is arranged on a surface of the instrument cluster (3) of a vehicle (4), facing the driver (2).

10. An instrument cluster (3) for a vehicle (4) comprising:
- a camera (10); and
- a mirror device (20);
wherein the mirror device (20) is arranged on a surface of the instrument cluster (3),
wherein the surface faces the driver (2) of the vehicle (4),
wherein the camera (10) is aligned to the mirror device (20) and is configured to capture an image of the driver (2) reflected by the mirror device (20).

11. A vehicle (4) with a driver monitoring system (1) according to each one of the claims 1 to 9.

12. A method for monitoring a driver of a vehicle, comprising the steps of:
- capturing (S1), by a camera, an image of the driver reflected by a mirror device;
- Determine (S2), by a control unit, the face of the driver based on the captured image;
- Monitor (S3), by a control unit, the driver based on an analysis of the captured image,
wherein said mirror device has a front surface comprising a plurality of mirror elements, the mirror elements being arranged such that an angle of incidence of a beam of light on the surface is not equal to an emergent angle of the beam of light.

13. A computer program element for controlling a driver monitoring system according to any one of claims 1 to 9 and/or a vehicle according to claim 11, which when executed by a processor of a driver monitoring system causes the driver monitoring system to carry out the method according to claim 12.

14. A computer-readable medium, on which a computer program element according to claim 13 is stored.
